# EUROPEAN PATENT SPECIFICATION

(11) **EP 1 762 155 B1**
(45) Date of publication and mention of the grant of the patent: **02.01.2008**
(21) Application number: 05019763.1
(22) Date of filing: 12.09.2005
(51) Int. Cl.: A47C 7/46

(54) **Support assembly and corresponding seat structure**
Trägervorrichtung und entsprechende Sitzstruktur
Ensemble support et structure de siège correspondante

(43) Date of publication of application: 14.03.2007
(73) Proprietor: L&P Swiss Holding Company, 9303 Wittenbach (CH)
(72) Inventor: Samain, Maxime, 8870 Izegem (BE)
(74) Representative: Banzer, Hans-Jörg

(56) References cited:
- DE-C1- 19 713 378
- US-A- 3 186 251
- US-A1- 2003 085 599
- US-A1- 2003 227 203

## Description

The present invention relates to a support assembly, and in particular to a support assembly for incorporation into a seat frame in order to provide a seat structure with an adjustable degree of support in two different regions, e.g. a lumbar region and a pelvis region. More specifically, the present invention relates to a support assembly comprising a support member for providing load bearing support for upholstery of a seat.

Support assemblies of the aforementioned kind are very well known and may have various configurations determined by the design of a seat in which the support assembly is to be mounted (see, e.g., WO 95/00039 A).

EP 0 874 575 B1 proposes a support assembly for incorporation into a seat frame, the support assembly comprises a wire framework having two lateral side wires suspendable in the seat frame and a plurality of transverse wires providing load bearing support for upholstery of the respective seat and extending between the lateral side wires.

Support assemblies of the aforementioned kind are incorporated in a seat frame of a back rest in order to support the lumbar region of a person sitting on the respective seat. When using a support assembly having a wire framework of the kind described above, this can be accomplished by pulling the two lateral side wires of the wire framework towards the front of the back rest of the seat. For example, EP 0 552 904 A1 discloses such a lumbar support assembly comprising a support member in the form of a platform element, which is suspended by tension springs in a seat frame to support the cushioning of a back rest. The support member has two lateral side wires and a plurality of transverse wires, and two Bowden cables are linked between respective portions of the lateral side wires to apply a force of longitudinal compression, whereby the side wires are caused to be hinged outwardly at an articulation point to vary the degree of lumbar support provided by the transverse wires.

Since the two sides of the support member of the support assembly should be displaced by the same amount at the same time for achieving a symmetric support feeling, it is necessary to shorten the extension of both Bowden cables by a respective actuator mechanism simultaneously, which however is difficult to achieve and requires two separate Bowden cables.

Further, it is known to provide lumbar support assemblies not only with an adjustable degree of support, but also with an adjustable height, which means that a vertical position of the region in which the support is provided can be adjusted. For this purpose, it is typically required to have one mechanism for adjusting the degree of support and a further mechanism for adjusting the height. Moreover, it is necessary to have two separate actuators for independently adjusting the height and the degree of support.

From GB 2 342 286 A, a support assembly is known which comprises a support member to be suspended in a seat frame and adjustable link means for varying the effective profile of the support. In particular, a plurality of the adjustable link means is provided which are spaced apart in a vertical direction of the seat frame, which allows for adjusting the degree of support in vertically different regions of the support member. Also in this case, two separate Bowden cables and an actuator are required for each of the different support regions.

In the above-known support assemblies, there exists therefore a problem as to a large number of components which have to be used for achieving a symmetric adjustable support in different regions. This increases costs of the seat, and may also result in problems as to accommodating the various components within the seat structure.

Therefore, the object underlying the present invention is to provide a support assembly in which it is possible to choose between different heights for a region of support, which has a simplified structure as compared to the solutions known from the prior art, and in which an adjustable support functionality and, in particular, a symmetric support feeling can be realized in different regions with only few components and at low cost.

According to the present invention, this object is achieved by a support assembly as defined by independent claim 1. The dependent claims define preferred and advantageous embodiments of the present invention.

The support assembly of the present invention comprises a support member for incorporation into a seat frame. The support member may be a wire framework having as side members two lateral side wires and a plurality of transverse wires as transverse members which extend between the two side members. The support member is preferably adapted to be suspended in a seat frame.

Furthermore, the support assembly of the present invention has a first support region with an adjustable degree of support and a second support region with an adjustable degree of support. The first support region and the second support region are preferably located at different heights of the support assembly, for example in the lumbar region and in the pelvis region or in a lumbar region of a large person and in the lumbar region of a small person.

The support assembly of the present invention comprises a first Bowden cable arrangement for adjusting the degree of support in the first support region and a second Bowden cable arrangement for adjusting the degree of support in the second support region. According to the invention, an actuator is coupled to the first Bowden cable arrangement and to the second Bowden cable arrangement and is configured to simultaneously act on the first Bowden cable arrangement and on the second Bowden cable arrangement in opposite directions, i.e. to increase the tension in one of the Bowden cable arrangements while decreasing the tension in the other Bowden cable arrangement and vice versa.

According to the above structure of the support assembly according to the present invention, it is possible to increase the degree of support in the first support region by operating the actuator in a first direction and to simultaneously decrease the degree of support in the second support region. Conversely, by operating the actuator in a second direction, it is possible to decrease the degree of support in the first support region and to increase the degree of support in the second support region. Thereby, it is possible to select between different positions for the support, and to adjust the degree of support in each of the different regions. Still, there is only one actuator required to achieve these different possibilities of adjustment. Consequently, a simple structure is provided for the support assembly and the support assembly can be realized at low cost.

Preferably, the support assembly comprises first attachment means for attaching a sheath of the first Bowden cable arrangement to one side of the support member in the first support region, second attachment means for attaching the sheath of the first Bowden cable arrangement to the opposite side of the support member in the first support region, third attachment means for attaching a sheath of the second Bowden cable arrangement to one side of the support member in the second support region, and fourth attachment means for attaching the sheath of the second Bowden cable arrangement to the opposite side of the support member in the second support region, a first end portion of the wire of the first Bowden cable arrangement extending from the first attachment means and being adapted to be connected to the seat frame, and a first end portion of the wire of the second Bowden cable arrangement extending from the third attachment means and being adapted to be connected to the seat frame. With this structure, when the support assembly is suspended in a seat frame, the degree of support can be adjusted in each of the support regions and by moving the support member with respect to the seat frame due to an increased or decreased length of the wire extending from the attachment means.

The first attachment means and the fourth attachment means can be located on the same side of the support member. In this case, also the second attachment means and the third attachment means are located on the same side of the support member, opposite to the first attachment means and the fourth attachment means. Alternatively, it could also be possible to locate the first attachment means and the third attachment means on the same side of the support member, which means that also the second attachment means and the fourth attachment means would be located on the same side of the support member, but opposite to the first and third attachment means. By means of these different locations for the attachment means, the support assembly can be easily adapted to different locations for accommodating the actuator. Those of the attachment means which are located on the same side of the support member can be integrally formed, which simplifies the structure of the support assembly.

According to a preferred embodiment, the sheath of the first Bowden cable arrangement and the sheath of the second Bowden cable arrangement each comprise a first portion and a second portion which are separated from each other. For the first Bowden cable arrangement, the first portion of the sheath extends from the actuator to a first frame attachment means for attaching the first portion of the sheath to the seat frame, and the second portion of the sheath extends from the first attachment means to the second attachment means. For the second Bowden cable arrangement, the first portion of the sheath extends from the actuator to a second frame attachment means for attaching the first portion of the sheath to the seat frame, and the second portion of the sheath extends from the third attachment means to the fourth attachment means. With such a configuration, it is possible to symmetrically act on both sides of the support member in the two support regions by using only two single Bowden cables, each for one of the different support regions.

Also according to a further preferred embodiment, the sheath of the first Bowden cable arrangement and the sheath of the second Bowden cable arrangement each comprise a first portion and a second portion which are separated from each other. According to this embodiment, the first attachment means and the third attachment means are located on opposite sides of the support member. For the first Bowden cable arrangement, the first portion of the sheath extends from the first attachment means to the actuator and the second portion of the sheath extends from the actuator to the second attachment means. For the second Bowden cable arrangement, the first portion of the sheath extends from the third attachment means to the actuator and the second portion of the sheath extends from the actuator to the fourth attachment means. A second end portion of the wire of the first Bowden cable arrangement extends from the second attachment means, and a second end portion of the wire of the second Bowden cable arrangement extends from the fourth attachment means. Also in this structure, it is possible to symmetrically act on the two sides of the support member in each of the support regions by using only a single Bowden cable for each of the support regions.

In the above embodiment, a preferred actuator comprises a slide member which is slidably connected to a fixed member of the actuator, the first portion of the sheath of the first Bowden cable arrangement and the first portion of the sheath of the second Bowden cable arrangement being coupled to the slide member and the second portion of the sheath of the first Bowden cable arrangement and the second portion of the sheath of the second Bowden cable arrangement being coupled to the fixed member. In this structure, by moving the slide member in one direction the tension in the first Bowden cable arrangement is increased and the tension in the second Bowden cable arrangement is decreased, and by moving the slide member in a second direction the tension in the first Bowden cable arrangement is decreased and the tension in the second Bowden cable arrangement is increased. The actuator preferably comprises means for moving the slide member, e.g. a toothed wheel which is engaged with a toothed surface of the slide member.

Another type of actuator which can be used in connection with the present invention comprises winding means for winding a wire of the first Bowden cable arrangement and the wire of the second Bowden cable arrangement in opposite directions. This means that when the wire of the first Bowden cable arrangement is wound, the wire of the second Bowden cable arrangement is unwound and vice versa.

According to the present invention, both manual-driven and motor-driven actuators may be used.

Further, it is preferred that an unsheathed portion of the wire of the first Bowden cable arrangement and/or an unsheathed portion of the wire of the second Bowden cable arrangement is covered with a plastic material. By this means, it is avoided that unsheathed portions of the wires generate noise in a situation that there is low tension on the respective Bowden cable and movement of the wire becomes possible.

The support assembly of the present invention is preferably incorporated into a seat frame of a seat structure, e.g. for forming a vehicle seat.

The support assembly of the present invention can be realized with different types of support members, e.g. wire frameworks, plate type support members, or support members having belts formed of a plastic material.

In the following, preferred embodiments of the present invention will be explained in detail with reference to the attached drawings.
Fig. 1 shows a perspective view of a support assembly according to a first embodiment of the present invention,
Fig. 2(a) shows a side view of the support assembly of Fig. 1, Fig. 2(b) schematically illustrates different support profiles of the support assembly, Fig. 2(c) illustrates the degree of support in a first support region and in a second support region as a function of actuator position,
Fig. 3 shows a bottom view of the support assembly of Fig. 1,
Fig. 4 shows a support assembly according to a second embodiment of the present invention,
Fig. 5 schematically illustrates an actuator of the embodiments as shown in Figs. 1-4,
Fig. 6 shows a support assembly according to a third embodiment of the present invention,
Fig. 7 shows a support assembly according to a fourth embodiment of the present invention, and
Fig. 8 schematically illustrates an actuator as used in the embodiment of Fig. 7.

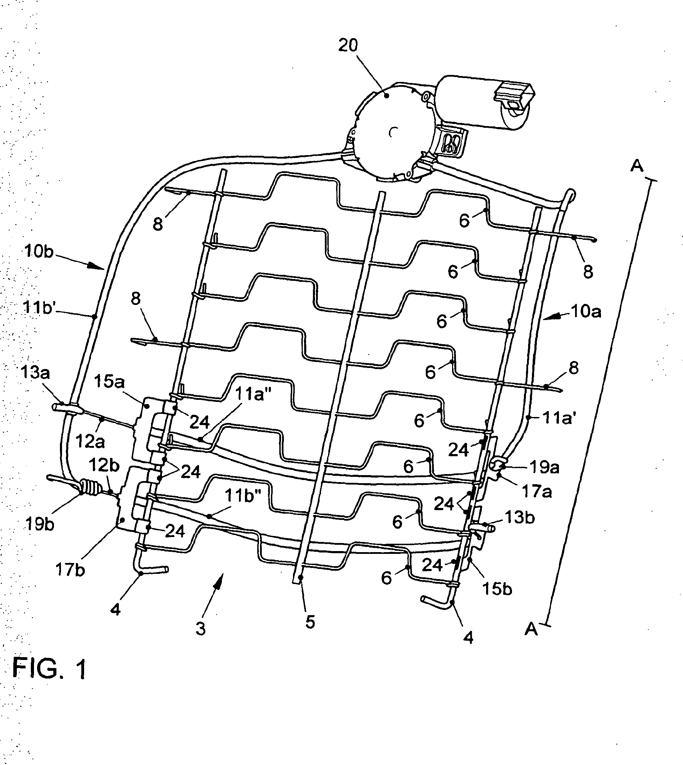

Fig. 1 shows a support assembly according to a first embodiment of the present invention, the support assembly being configured to be incorporated or suspended in a seat frame of a back rest of a seat. The support assembly is configured to provide load bearing support for upholstery or cushioning of the seat by means of a support member 3. In the present embodiment, the support member is formed as a wire framework. It comprises a pair of side wires 4 forming two elongate side members and a plurality of transverse wires 6 as transverse members extending between the two side members. The transverse wires 6 are anchored to the side wires 4. According to the embodiment shown in Fig. 1, the transverse wires 6 are anchored to the side wires 4 by being wound around the latter. Intermediate portions of the transverse wires 6 are angled in the support plane so that the support member 3 becomes extensible under loading placed upon the support arrangement.

The side wires 4 may be formed by synthetic plastic covered paper-wrapped steel cords and form two generally vertical lateral rails. The transverse wires 6 extending between the two side wires 4 penetrate and intermediate vertical cord 5 of paper or synthetic plastic material which serves to provide some degree of stability to the wire framework comprising the two side wires 4 and the transverse wires 6 and maintains a predetermined vertical spacing between the transverse wires 6. Alternatively, the side members may comprise formed wires of a plastic material.

As shown in Fig. 1, the lower ends of the side wires 4 are angled so as to allow the incorporation of the support member 3 into the seat frame. The support member 3 can be suspended in the seat frame by means of tension springs anchored between the seat frame and the lower ends of the side wires 4 and some of the transverse wires 6, respectively.

As can be taken from Fig. 1, some of the transverse wires 6 extend laterally beyond the side wires 4 after having been wound around the latter and terminate in free ends 8. Some of these free ends 8 are formed into hook-like fingers which may extend in the support plane or may also be directed backwards or in any other suitable direction which allows to anchor a tension spring to the respective hook-like fingers. The fact that the extended portions 8 of the transverse wires 6 terminate in free ends enables more versatile lateral support to be provided, particularly in the lumbar region of a back rest. In particular, the hook-like fingers of the free ends 8 can be individually angled, if desired, to conform to the contour of the back rest. If the laterally extending free ends 8 are unconnected with respect to the seat frame, an effective adjustable lumbar support can be provided by arching the two side wires 4 in the lumbar region or in the pelvis region of the support member 3, as the free ends 8 can provide laterally contoured support without interfering with the arching of the two side wires 4.

If desired, the two side wires 4 may be angled to provide regions of the support member 3 which have different transverse widths between the side wires 4.

The support assembly comprises adjustment means for adjustably arching the side wires 4 in two vertically different regions of the support assembly. These adjustment means comprise an actuator 20, which in the present embodiment is electrically driven.

The support assembly comprises a first Bowden cable arrangement 10a for adjusting the degree of support in a first support region, e.g. in the lumbar region of a seat back rest. A second Bowden cable arrangement 10b is provided for adjusting the degree of support in a second support region below the first support region, e.g. in a pelvis region of the seat back rest. The first support region may also correspond to a lumbar region of a large person, while the second support region corresponds to a lumbar region of a small person, thereby allowing for the support characteristics to be adapted to different sizes of a seat occupant.

The first Bowden cable arrangement 10a and the second Bowden cable arrangement 10b each comprise an inner wire 12a, 12b and an outer sheath 11 a', 11 a", 11 b', 11 b" for guiding the wire 12a, 12b.

The support assembly comprises first attachment means 15a for attaching the sheath 11 a', 11 a" of the first Bowden cable arrangement 10a to a first side of the support member 3. Second attachment means 17a are provided for attaching the sheath 11 a', 11 a" of the first Bowden cable arrangement to a second side of the support member 3, opposite to the first side.

A first end portion 13a of the wire 12a of the first Bowden cable arrangement 10a extends from the first attachment means 15a and is adapted to be connected to the seat frame. In particular, the first end portion of the wire 12a is provided with a connecting means having the shape of a Z-nipple. From the second attachment means 17a, the first Bowden cable arrangement 10a extends to the actuator 20. A first frame attachment means 19a is provided at the side of the second attachment means 17a for attaching the sheath 11 a', 11 a" of the first Bowden cable arrangement 10a to the seat frame.

As illustrated in Fig. 1, the sheath 11a', 11a" of the first Bowden cable arrangement 10a comprises a first portion 11 a' extending between the actuator 20 and the first frame attachment means 19a and a second portion 11a" extending between the first attachment means 15a and the second attachment means 17a. The first portion 11a' and the second portion 11a" are separated from each other, i.e. only the wire 12a of the first Bowden cable arrangement 10a extends between the second attachment means 17a and the first frame attachment means 19a.

The first frame attachment means 19a is provided with a hook-like extension for connecting to the seat frame.

As can be seen, the portions of the wire 12a of the first Bowden cable arrangement 10a extending from the first attachment means 15a and the second attachment means 17a can be symmetrically shortened by increasing the tension in the first Bowden cable arrangement 10a, thereby pulling the support member 3 towards the seat frame.

Similarly, the support assembly comprises a third attachment means 15b for attaching the sheath 11b', 11b" of the second Bowden cable arrangement 10b to the second side of the support member 3. A fourth attachment means 17b is provided for attaching the sheath 11b', 11b" of the first Bowden cable arrangement to the first side of the support member 3.

A first end portion 13b of the wire 12b of the second Bowden cable arrangement 10b extends from the third attachment means 15b and is adapted to be connected to the seat frame. In particular, the first end portion of the wire 12b is provided with a connecting means having the shape of a Z-nipple. From the fourth attachment means 17b, the second Bowden cable arrangement 10b extends to the actuator 20. A second frame attachment means 19b is provided at the side of the fourth attachment means 17b for attaching the outer sheath 11b', 11b" of the second Bowden cable arrangement 10b to the seat frame.

As illustrated in Fig. 1, the sheath 11b', 11b" of the second Bowden cable arrangement 10b comprises a first portion 11b' extending between the actuator 20 and the second frame attachment means 19b and a second portion 11b" extending between the third attachment means 15b and the fourth attachment means 17b. The first portion 11b' and the second portion 11b" are separated from each other, i.e. only the wire 12b of the second Bowden cable arrangement 10b extends between the fourth attachment means 17b and the second frame attachment means 19b.

The second frame attachment means 19b is provided with a hook-like extension for connecting to the seat frame.

As can be seen, the portions of the wire 12b of the second Bowden cable arrangement 10b extending from the third attachment means 15b and the fourth attachment means 17b can be symmetrically shortened by increasing the tension in the second Bowden cable arrangement 10b, thereby pulling the support member 3 towards the seat frame.

in the embodiment of Fig. 1, the second end portions of the wires 12a, 12b of the first and second Bowden cable arrangements are coupled to the actuator 20, which is configured to simultaneously act on the first Bowden cable arrangement 10a and the second Bowden cable arrangement 10b in opposite directions. This means that when the tension in the first Bowden cable arrangement 10a is increased, the tension in the second Bowden cable arrangement 10b is decreased and vice versa. Accordingly, the degree of support in the first support region is increased while the degree of support in the second region is decreased and vice versa. A user can select between two different heights for the support, and the degree of support can be adjusted in each of the support regions. Still only one actuator and only a single Bowden cable for each of the support regions is required.

As illustrated in Fig. 1, the first attachment means 15a, the second attachment means 17a, the third attachment means 15b, and the fourth attachment means 17b are formed as plate clips which can be clipped onto the respective side wire 4 of the support member 3 so as to attach the sheath of the Bowden cable arrangement to the respective side of the support member 3. In each case, the plate clip has two end portions 24 which are formed like a resilient or flexible hook or clip so that these end portions 24 can be easily clipped onto the respective side wire 4. Each of the plate clips has a hole through which the wire 12a, 12b of the respective Bowden cable arrangement 10a, 10b extends.

The first frame attachment means 19a is formed as a spring which is wound around an end portion of the first portion 11 a' of the sheath of the first Bowden cable arrangement 10a. From the spring there extends the hook-like extension for connecting the first frame attachment means 19a to the seat frame. Similarly, the second frame attachment means 19b is formed as a spring wound around an end portion of the first portion 11b' of the sheath of the second Bowden cable arrangement 10b, and, the extension which has a hook-like shape for connecting to the seat frame extending therefrom. These hook-like extensions of the frame attachment means 19a, 19b as well as the Z-nipples and the first end portions of the wires 12a, 12b are inserted to corresponding receiving structures on the seat frame, which are preferably located near the front edge of the seat frame.

Therefore, when increasing the tension in one of the Bowden cable arrangements 10a, 10b, the support member 3 is pulled towards the front edge of the seat frame in the corresponding support region and the degree of support is increased. If the tension in the Bowden cable arrangement 10a, 10b is decreased, the support member 3 will move back due to the resilient characteristics of the support member 3 itself and/or due to the elastic suspension of the support member 3 in the seat frame.

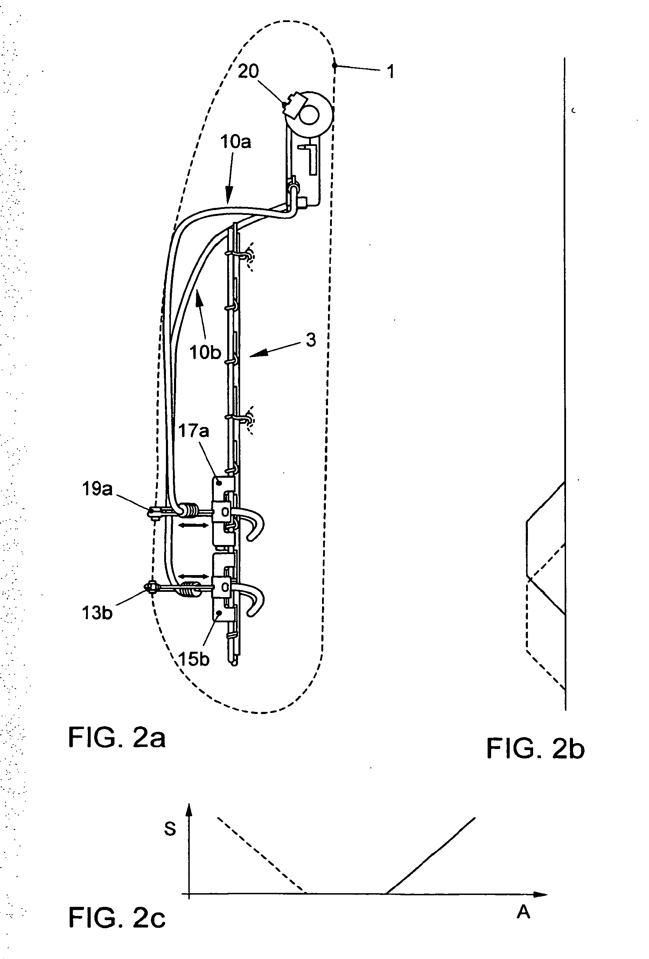

Fig. 2(a) shows a side view of the support assembly of Fig. 1. In Fig. 2(a), the seat frame is indicated by a dashed line denoted by 1. As can be seen, the first frame attachment means 19a and the first end portion 13b of the wire 12b are connected to the seat frame 1 near the front edge of the seat frame 1. By increasing the tension in the first Bowden cable assembly 10a, the support member 3 is moved towards the front edge of the seat frame 1, thereby increasing the degree of support. Simultaneously, the tension in the second Bowden cable arrangement 10b is decreased and the support member 3 moves backward from the front edge of the seat frame 1, thereby decreasing the degree of support. This is in Fig. 2(a) illustrated by arrows near the frame attachment means 19a and the first end portion 13b of the wire 12b. A similar configuration is provided on the opposite side of the support assembly.

Fig. 2(b) schematically illustrates support profiles provided by the support assembly as shown in Fig. 2(a). A solid line illustrates a maximum support configuration in the first support region. A dashed line illustrates a maximum support configuration in the second support region. By means of the actuator 20, it is possible to continuously change between the support configurations and to adjust the degree of support in each of the support regions.

Fig. 2(c) illustrates the degree of support S in the first support region and in the second support region as a function of actuator position A. The degree of support in the first support region is illustrated by a solid line and the degree of support in the second support region is illustrated by a dashed line. As can be seen, as the actuator position advances from left to right in Fig. 2(c), the degree of support in the second support region decreases from maximum to zero. After an intermediate region in which actually no increased support is provided in either support region, the degree of support in the first support region increases from zero to maximum. Of course the traces shown in Figs. 2(b) and (c) are only schematic and it is possible to adapt the actual characteristics of the support assembly to specific requirements, for example by adjusting the tensions of the first Bowden cable arrangement 10a and a second Bowden cable arrangement 10b relative to each other.

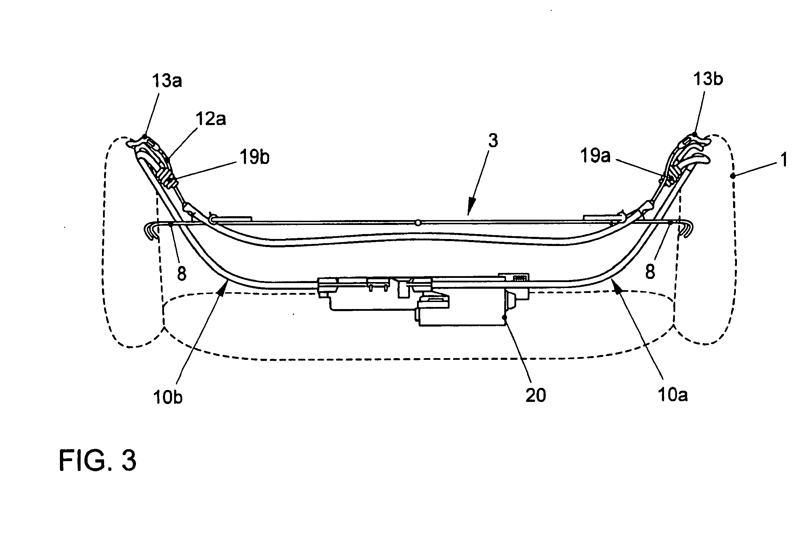

Fig. 3 shows a bottom view of the support assembly as shown in Fig. 1. As can be seen, the actuator 20 can be easily accommodated in a rear region of the seat frame 1.

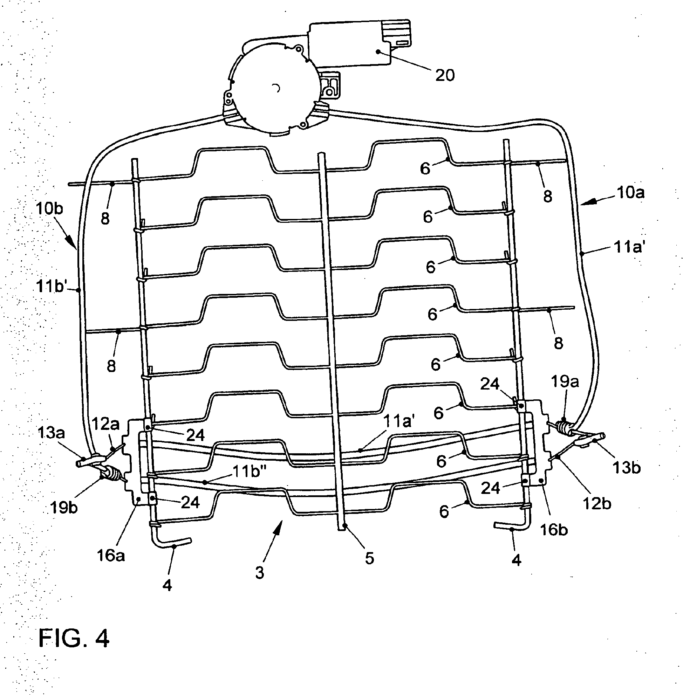

Fig. 4 illustrates a second embodiment of the support assembly according to the present invention. The support assembly of Fig. 4 generally corresponds to that of Figs. 1-3, and similar components have been designated by the same reference numerals. In the following, only the differences as compared to the support assembly of Fig. 1-3 will be explained.

In the support assembly of Fig. 4, the first attachment means 15a and the fourth attachment means 17b of the support assembly as shown in Fig. 1 have been integrated into a single plate clip 16a. Similarly, the second attachment means 17a and the third attachment means 15b have been integrated into a single plate clip 16b. As in the embodiment of Figs. 1-3, the plate clips 16a and 16b are provided with two end portions 24 which are formed like a resilient or flexible hook or clip for attaching these end portions 24 to the respective side wire 4.

Further, a connecting portion of the first end portion 13a of the wire 12a of the first Bowden cable arrangement 10a is integrally connected with the second frame attachment means 19b. Similarly, a connecting portion of the first end portion 13b of the wire 12b of a second Bowden cable arrangement 10b is integrally connected with the first frame attachment means 19a. This can, for example, be achieved by forming a Z-nipple on the first end portion of the wires 12a, 12b from the same wire which is wound around the sheath 11a', 11b' of the Bowden cable arrangements 10a, 10b for forming the frame attachment means 19a, 19b. Further, it is possible to form the Z-nipple with a structure for receiving the sheath 11a', 11b' of the respective Bowden cable arrangement 10a', 10b'.

In the support assembly of Fig. 4, fewer components are required and therefore a simplified structure is achieved. Further, only one receiving structure is required on each side of the seat frame for connecting the first end portions 13a, 13b of the wires 12a, 12b and the sheaths 11a', 11b' of the Bowden cable arrangements 10a, 10b to the seat frame.

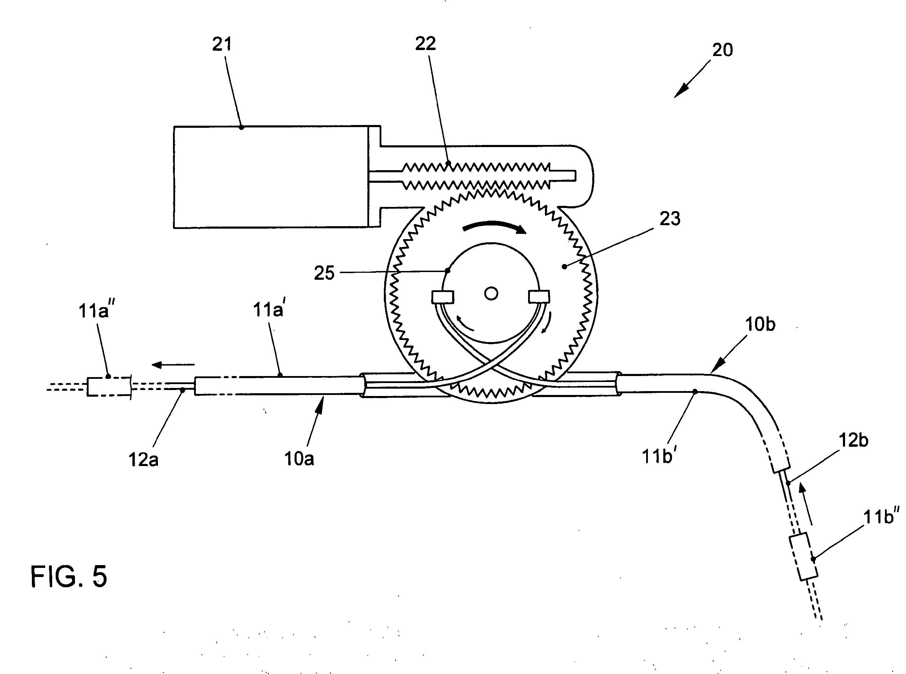

Fig. 5 schematically illustrates the actuator 20 of the support assemblies as shown in Figs. 1-4. The actuator 20 comprises an electrically operated motor 21. A drive shaft of the motor 21 is provided with a worm 22 which is engaged with a toothed wheel 23. Accordingly, by operating the motor 21, the toothed wheel 23 is caused to rotate. On the toothed wheel 23 a winding means 25 is provided, to which the second end portion of the wire 12a of the first Bowden cable arrangement 10a and the second end portion of the wire 12b of the second Bowden cable arrangement 10b are coupled. As can be seen, the end portions of the wires 12a, 12b are coupled to the winding means 25 in such a manner that rotation of the winding means 25 in one direction causes the wire 12b of the first Bowden cable arrangement 10b to be wound while the wire 12a of the first Bowden cable arrangement 10a is caused to be unwound. Consequently, the tension in the first Bowden cable arrangement 10a is decreased and the tension in the second Bowden cable arrangement 10b is increased, as illustrated by the arrows. When the motor 21 is operated in the opposite direction, the wire 12a of the first Bowden cable arrangement 10a is wound while the wire 12b of the second Bowden cable arrangement 10b is unwound, thereby increasing the tension in the first Bowden cable arrangement 10a and decreasing the tension in the second Bowden cable arrangement 10b.

The worm gear formed of the worm 22 and the toothed wheel 23 provides the actuator 20 with a self-blocking capability, i.e. any torque applied to the toothed wheel 23 from the Bowden cable arrangements will not change the position of the actuator.

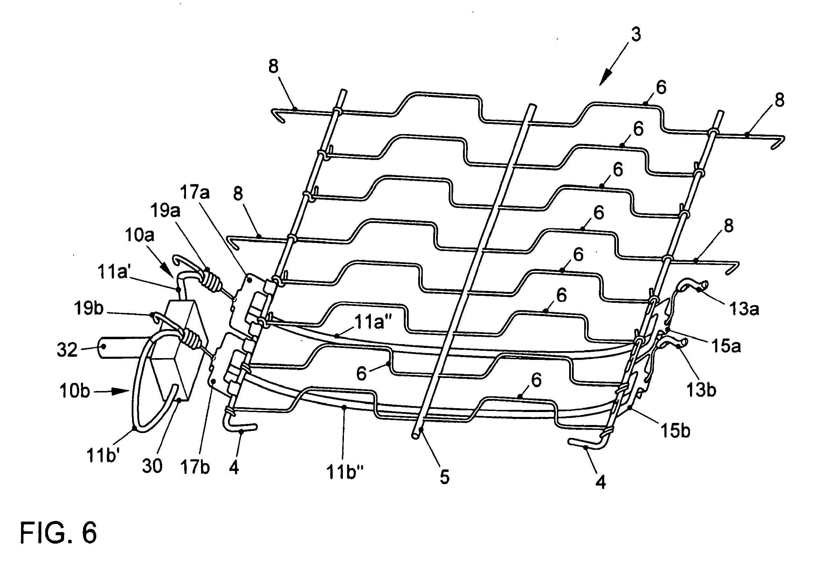

Fig. 6 illustrates a support assembly according to a third embodiment. The embodiment of Fig. 6 generally corresponds to the support assembly as shown in Figs. 1-3 and similar components have been designated with the same reference numerals. In the following, only the differences as compared to the support assembly of Figs. 1-3 will be explained. While in the support assembly of Figs. 1-3 the first attachment means 15a and the fourth attachment means 17b are located on the same side of the support member 3, in the support assembly of Fig. 6 the first attachment means 15a and the third attachment means 15b are located on the same side of the support member. Consequently, also the second attachment means 17a and the fourth attachment means 17b are located on the same side of the support member 3, but opposite to the first and third attachment means 15a, 15b. In particular, the first attachment means 15a and the third attachment means 15b are located on the second side of the support member 3 and the second attachment means 17a and the fourth attachment means 17b are located on the first side of the support member 3.

In the arrangement of Fig. 6, the connection from the actuator 30 to the support member 3 can be made from the same side. Therefore, if the actuator is located on the side of the seat structure as illustrated in Fig. 6, the length of the Bowden cable arrangements 10a, 10b can be reduced. This arrangement is particularly useful if the actuator 30 is a manual actuator which is typically located on the side of a seat structure so as to be easily accessible by a user. The actuator 30 shown in Fig. 6 is a manually operated actuator and comprises an actuating knob or shaft 32 for manual operation by the user. Of course, the support assembly as shown in Fig. 6 could also be provided with an electrically operated actuator.

Further, it would be possible to integrally form the first and third attachment means 15a, 15b and the second and fourth attachment means 17a, 17b. Moreover, the first frame attachment means 19a and the second frame attachment means 19b could be integrally formed, and the first end portions 13a, 13b of the wires 12a, 12b could be connected to a single connecting means, e.g. a Z-nipple. This arrangement would have characteristics similar to that of the second embodiment described with reference to Fig. 4.

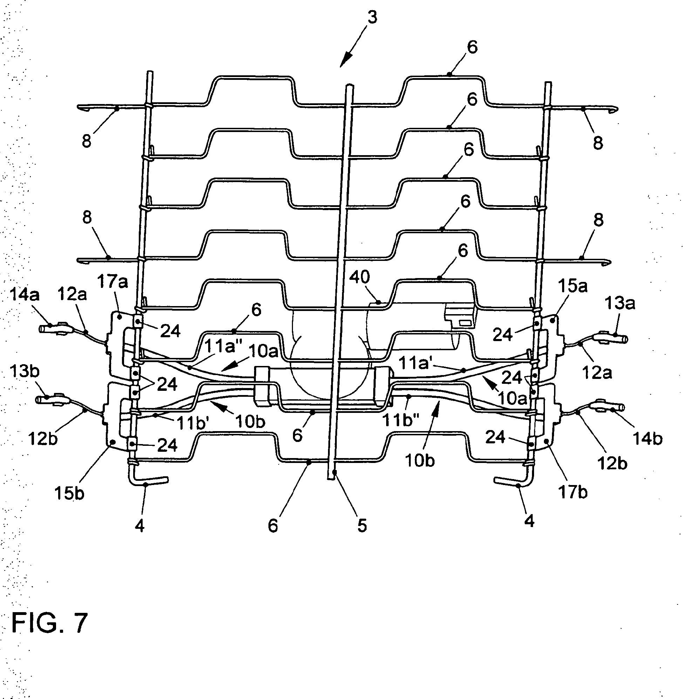

Fig. 7 shows a fourth embodiment of a support assembly according to the present invention. Components corresponding to those of the embodiment as shown in Figs. 1-3 have been designated with the same reference numerals and further explanations thereof will be omitted. In the following, only the differences as compared to the support assembly of Figs. 1-3 will be explained.

As in the embodiment of Figs. 1-3, the support assembly of Fig. 7 has a first end portion 13a of the wire 12a of the first Bowden cable arrangement 10a extending from the first attachment means 15a. Similarly, the first end portion 13b of the wire 12b of the second Bowden cable arrangement 10b extends from the third attachment means 15b. However, from the first attachment means 15a, the first Bowden cable arrangement 10a extends to an actuator 40, and from the actuator 40 the first Bowden cable arrangement 10a extends to the second attachment means 17a. A second end portion 14a of the wire 12a of the first Bowden cable arrangement extends from the second attachment means 17a and is configured to be connected to the seat frame. Similarly, the second Bowden cable arrangement 10b extends from the third attachment means 15b to the actuator 40, and from the actuator 40 to the fourth attachment means 17b. A second end portion 14b of the wire 12b of the second Bowden cable arrangement 10b extends from the fourth attachment means 17b. The first end portions 13a, 13b and the second end portions 14a, 14b of the wires 12a, 12b are adapted to be connected to the seat frame by being provided with connecting means having the shape of a Z-nipple, as shown in Fig. 7.

The sheath 11a', 11a" of the first Bowden cable arrangement 10a has a first portion 11a' and a second portion 11a" which are separated from each other. The first portion 11a' of the sheath extends from the first attachment means 15a to the actuator 40. The second portion 11a" of the sheath extends from the actuator 40 to the second attachment means 17a. The wire 12a of the first Bowden cable arrangement 10a extends through the actuator 40.

Similarly, the sheath 11b', 11b" of the second Bowden cable arrangement 10b has a first portion 11b' and a second portion 11b" which are separated from each other. The first portion 11b' of the sheath extends from the third attachment means 15b to the actuator 40. The second portion 11b" of the sheath extends from the actuator 40 to the fourth attachment means 17b. The wire 12b of the second Bowden cable arrangement 10b extends through the actuator 40.

The actuator 40 is configured to simultaneously increase the tension in the first Bowden cable arrangement 10a and decrease the tension in the second Bowden cable arrangement 10b and vice versa.

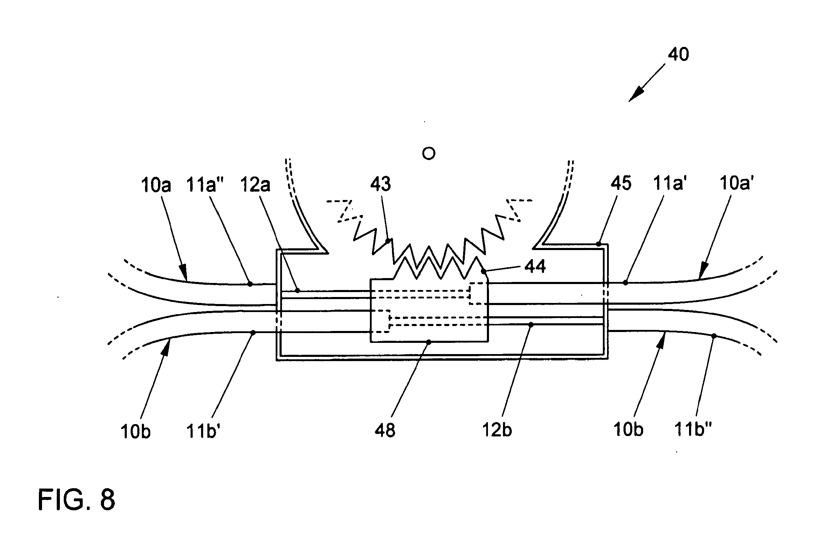

A preferred implementation of the actuator 40 is illustrated in Fig. 8. As illustrated in Fig. 8, the actuator 40 comprises a housing 45 which constitutes a fixed member and a slide member 48 which is slidable with respect to the housing 45. As illustrated, the first Bowden cable arrangement 10a and the second Bowden cable arrangement 10b extend through the actuator housing 45 along an essentially transversal direction, and the slide member 48 is slidable with respect to the housing 45 along this transversal direction.

The first portion 11a' of the sheath of the first Bowden cable arrangement 10a is connected to the slide member 48. The second portion 11a" of this sheath of the first Bowden cable arrangement 10a is connected to the housing 45. Similarly, the first portion 11b' of the sheath of the second Bowden cable arrangement 10b is connected to the slide member, while the second portion 11b" of the sheath of the second Bowden cable arrangement 10b is connected to the housing 45. Consequently, by moving the slide member 48 along the transversal direction, the distance between the first portion 11a' and the second portion 11a" of the sheath of the first Bowden cable arrangement 10a and the distance between the first portion 11b' and the second portion 11b" of the sheath of the second Bowden cable arrangement 10b are modified in opposite directions, thereby changing the tension. In particular, if the slide member 48 is moved to the right of Fig. 8, the tension in the first Bowden cable arrangement 10a is increased, and the tension in the second Bowden cable arrangement 10b is decreased. Conversely, when the slide member 48 is moved to the left, the tension in the first Bowden cable arrangement 10a is decreased and the tension in the second Bowden cable arrangement 10b is increased.

As further illustrated, the actuator 40 comprises means for moving the slide member 48 along a transversal direction. For this purpose, the actuator 40 comprises a toothed wheel 43 which is engaged with a toothed surface 44 of the slide member 48. The toothed wheel 43 is preferably driven by an electric motor (not illustrated in Fig. 8).

In the above-described embodiments the tension in the second Bowden cable arrangement 10b decreases when the tension in the first Bowden cable arrangement 10a increases and vice versa. Eventually, there may be no tension at all in one of the Bowden cable arrangements 10a, 10b. In this case, unsheathed portions of the wires 12a, 12b can more freely move and may come into contact with metallic surfaces of the seat structure. In order to avoid an undesirable generation of noise, it is therefore preferable to cover unsheathed portions of the wires 12a, 12b with a plastic material. Such unsheathed portions may in particular exist in the vicinity of the attachment means 15a, 17a, 15b, 17b, 16a, 16b. For the same reasons, it is preferable to cover the connecting means for connecting the end portions 13a, 13b, 14a, 14b of the wires 12a, 12b to the seat frame with a plastic material so as to avoid metal to metal contact.

Although not explicitly shown in the drawings, it is also preferable to provide the actuators 30, 40 of the third and fourth embodiments with a self-blocking capability, e.g. by using a worm gear as in the actuator 20 of the first and second embodiments.

As explained above, the support assemblies as shown in Figs. 1-4, 6, and 7 allow for adjusting the degree of support in two different regions of a support assembly by means of a single actuator. Thereby, it is possible not only to adjust the degree of support in each of the regions, but also to select different heights for the support. The specific preferences with respect to the profile of the support can be met in a more accurate way. Further, it is possible to adapt the support assembly to differently sized users. At the same time, the structure of the support assembly is kept simple and only few components are required for the implementation.

## Claims

1. A support assembly having a first support region with adjustable degree of support and a second support region with adjustable degree of support, comprising:
a support member (3) for incorporation into a seat frame (1),
a first Bowden cable arrangement (10a) for adjusting the degree of support in the first support region, and
a second Bowden cable arrangement (10b) for adjusting the degree of support in the second support region,
**characterized by**
an actuator (20; 30; 40) coupled to the first Bowden cable arrangement (10a) and to the second Bowden cable arrangement (10b),
wherein the actuator (20; 30; 40) is configured to simultaneously act on the first Bowden cable arrangement (10a) and on the second Bowden cable arrangement (10b) in opposite directions.

2. The support assembly according to claim 1,
**characterized in that**
the first Bowden cable arrangement (10a) and the second Bowden cable arrangement (10b) each comprise a wire (12a, 12b) guided in a sheath (11 a', 11 a", 11b', 11 b"), wherein the support assembly further comprises:
first attachment means (15a; 16a) for attaching the sheath (11 a', 11 a") of the first Bowden cable arrangement (10a) to one side of the support member (3) in the first support region,
second attachment means (17a; 16b) for attaching the sheath (11a', 11a") of the first Bowden cable arrangement to the opposite side of the support member (3) in the first support region,
third attachment means (15b; 16b) for attaching the sheath (11b', 11 b") of the second Bowden cable arrangement to one side of the support member (3) in the second support region,
fourth attachment means (17b; 16a) for attaching the sheath (11 b', 11 b") of the second Bowden cable arrangement (10b) to the opposite side of the support member (3) in the second support region,
wherein a first end portion (13a) of the wire (12a) of the first Bowden cable arrangement (10a) extends from the first attachment means (15a; 16a) and is adapted to be connected to the seat frame (1), and
wherein a first end portion (13b) of the wire (12b) of the second Bowden cable arrangement (10b) extends from the third attachment means (15a; 16b) and is adapted to be connected to the seat frame (1).

3. The support assembly according to claim 2,
**characterized in that**
the first attachment means (15a; 16a) and the fourth attachment means (17b; 16a) are located on the same side of the support member (3) and the second attachment means (17a; 16b) and the third attachment means (15b; 16a) are located on the same side of the support member (3).

4. The support assembly according to claim 3,
**characterized in that**
the support assembly comprises a member (16a) integrally forming the first attachment means and the fourth attachment means and/or a member (16b) integrally forming the second attachment means and the third attachment means.

5. The support assembly according to any one of claims 2 to 4,
**characterized in that**
the sheaths (11a', 11a", 11b', 11b") of the first Bowden cable arrangement (10a) and the second Bowden cable arrangement (10b) each comprise a first portion (11a', 11 b') and a second portion (11a", 11 b") which are separated from each other, wherein for the first Bowden cable arrangement (10a) the first portion (11 a') of the sheath extends from the actuator (20; 30) to a first frame attachment means (19a) for attaching the first portion (11 a') of the sheath to the seat frame (1) and the second portion (11a") of the sheath extends from the first attachment means (15a; 16a) to the second attachment means (17a; 16b), and
wherein for the second Bowden cable arrangement (10b) the first portion (11b') of the sheath extends from the actuator (20; 30) to a second frame attachment means (19b) for attaching the first portion (11 b') of the sheath to the seat frame (1) and the second portion (11b") of the sheath extends from the third attachment means (15b; 16b) to the fourth attachment means (17b; 16a).

6. The support assembly according to claim 5,
**characterized in that**
the first frame attachment means (19a) is integrally formed with a connecting means for connecting the first end portion (13b) of the wire (12b) of the second Bowden cable arrangement (10b) to the seat frame (1) and/or the second frame attachment means (19b) is integrally formed with a connecting means for connecting the first end portion (13a) of the wire (12a) of the first Bowden cable arrangement (10a) to the seat frame (1).

7. The support assembly according to any one of the preceding claims 2 to 6,
**characterized in that**
a connecting means for connecting the first end portion (13a) of the wire (12a) of the first Bowden cable arrangement (10a) to the seat frame (1) and/or a connecting means for connecting the first end portion (13b) of the wire (12b) of the second Bowden cable arrangement (10b) to the seat frame (1) has the shape of a Z-nipple.

8. The support assembly according to claim 3 or claim 4,
**characterized in that**
the sheaths (11 a', 11 a", 11 b', 11 b") of the first Bowden cable arrangement (10a) and the second Bowden cable arrangement (10b) each comprise a first portion (11 a', 11 b") and a second portion (11 a", 11 b") which are separated from each other,
wherein for the first Bowden cable arrangement (10a) the first portion (11a') of the sheath extends from the first attachment means (15a) to the actuator (40) and the second portion (11a") of the sheath extends from the actuator (40) to the second attachment means (17a),
wherein for the second Bowden cable arrangement (10b) the first portion (11b') of the sheath extends from the third attachment means (15b) to the actuator (40) and the second portion (11 b") of the sheath extends from the actuator (40) to the fourth attachment means (17b),
wherein a second end portion (14a) of the wire (12a) of the first Bowden cable arrangement (10a) extends from the second attachment means (17a), and
wherein a second end portion (14b) of the wire (12b) of the second Bowden cable arrangement extends from the fourth attachment means (17b).

9. The support assembly according to claim 8,
**characterized in that**
the actuator (40) comprises a slide member (48) which is slidably connected to a fixed member (45) of the actuator (40), the first portion (11a') of the sheath of the first Bowden cable arrangement (10a) and the first portion (11 b') of the sheath of the second Bowden cable arrangement (10b) being coupled to the slide member (48) and the second portion (11 a') of the sheath of the first Bowden cable arrangement (10a) and the second portion (11 b") of the sheath of the second Bowden cable arrangement (10b) being coupled to the fixed member (45).

10. The support assembly according to claim 8 or claim 9,
**characterized in that**
the actuator (40) further comprises means (43, 44) for moving the slide member (48).

11. The support assembly according to any one of claims 1 to 8,
**characterized in that**
the actuator (20; 30) comprises winding means (25) for winding a wire (12a) of the first Bowden cable arrangement (10a) and a wire (12b) of the second Bowden cable arrangement (10b) in opposite directions.

12. The support assembly according to any one of claims 2 to 11,
**characterized in that**
the support member (3) comprises two side members (4) and a plurality of transverse members (6) extending between the side members (4),
wherein the first attachment means (15a; 16a), second attachment means (17a; 16b), third attachment means (17a; 16b), and fourth attachment means (17b; 16a) are configured to at least partly embrace the corresponding side member (4).

13. The support assembly according to claim 12,
**characterized in that**
the first attachment means (15a; 16a), the second attachment means (17a; 16b), the third attachment means (15b; 16b), and the fourth attachment means (17b; 16a) have at least one clip portion (24) for attachment to the respective side member (4).

14. The support assembly according to any one of the preceding claims,
**characterized in that**
an unsheathed portion of a wire (12a) of the first Bowden cable arrangement (10a) and/or an unsheathed portion of a wire (12b) of the second Bowden cable arrangement (10b) is covered with a plastic material.

15. The support assembly according to any one of the preceding claims,
**characterized in that**
the actuator (20; 30; 40) is provided with a self-blocking capability.

16. A seat structure, comprising
a seat frame (1),
a support assembly according to any one of the preceding claims, the support assembly being coupled to the seat frame (1).

17. The seat structure according to claim 16,
**characterized in that**
the support assembly is elastically suspended in the seat frame (1).

## Patentansprüche

1. Stützvorrichtung, welche einen ersten Stützbereich mit einem einstellbaren Umfang einer Stützfunktion und einen zweiten Stützbereich mit einem einstellbaren Umfang einer Stützfunktion aufweist, umfassend:
ein Stützteil (3) zum Einbau in einen Sitzrahmen (1),
eine erste Bowdenzuganordnung (10a), um den Umfang der Stützfunktion bei dem ersten Stützbereich einzustellen, und
eine zweite Bowdenzuganordnung (10b), um den Umfang der Stützfunktion bei dem zweiten Stützbereich einzustellen,
**gekennzeichnet durch**
eine Betätigungsvorrichtung (20; 30; 40), welche mit der ersten Bowdenzuganordnung (10a) und der zweiten Bowdenzuganordnung (10b) gekoppelt ist,
wobei die Betätigungsvorrichtung (20; 30; 40) derart ausgestaltet ist, dass sie gleichzeitig auf die erste Bowdenzuganordnung (10a) und auf die zweite Bowdenzuganordnung (10b) in entgegengesetzten Richtungen wirkt.

2. Stützvorrichtung nach Anspruch 1,
**dadurch gekennzeichnet,**
**dass** die erste Bowdenzuganordnung (10a) und die zweite Bowdenzuganordnung (10b) jeweils einen Draht (12a, 12b) umfassen, welcher in einer Hülle (11a', 11a", 11 b', 11 b") geführt ist, wobei die Stützvorrichtung darüber hinaus umfasst:
erste Befestigungsmittel (15a; 16a), um die Hülle (11a', 11a") der ersten Bowdenzuganordnung (10a) an einer Seite des Stützteils (3) bei dem ersten Stützbereich anzubringen,
zweite Befestigungsmittel (17a; 16b), um die Hülle (11a', 11a") der ersten Bowdenzuganordnung an der gegenüberliegenden Seite des Stützteils (3) bei dem ersten Stützbereich anzubringen,
dritte Befestigungsmittel (15b; 16b), um die Hülle (11 b', 11 b") der zweiten Bowdenzuganordnung an einer Seite des Stützteils (3) bei dem zweiten Stützbereich anzubringen,
vierte Befestigungsmittel (17b; 16a), um die Hülle (11 b', 11 b") der zweiten Bowdenzuganordnung (10b) an der gegenüberliegenden Seite des Stützteils (3) bei dem zweiten Stützbereich anzubringen,
wobei sich ein erster Endabschnitt (13a) des Drahtes (12a) der ersten Bowdenzuganordnung (10a) von den ersten Befestigungsmitteln (15a' 16a) erstreckt und derart ausgestaltet ist, um mit dem Sitzrahmen (1) verbunden zu werden; und
wobei sich ein erster Endabschnitt (13b) des Drahtes (12b) der zweiten Bowdenzuganordnung (10b) von den dritten Befestigungsmitteln (15a; 16b) erstreckt und derart ausgestaltet ist, um mit dem Sitzrahmen (1) verbunden zu werden.

3. Stützvorrichtung nach Anspruch 2,
**dadurch gekennzeichnet,**
**dass** die ersten Befestigungsmittel (15a; 16a) und die vierten Befestigungsmittel (17b; 16a) auf derselben Seite des Stützteils (3) angeordnet sind, und dass die zweiten Befestigungsmittel (17a; 16b) und die dritten Befestigungsmittel (15b; 16a) auf derselben Seite des Stützteils (3) angeordnet sind.

4. Stützvorrichtung nach Anspruch 3,
**dadurch gekennzeichnet,**
**dass** die Stützvorrichtung ein Teil (16a), welches integral die ersten Befestigungsmittel und die vierten Befestigungsmittel ausbildet und/oder ein Teil (16b), welches integral die zweiten Befestigungsmittel und die dritten Befestigungsmittel ausbildet, umfasst.

5. Stützvorrichtung nach einem der Ansprüche 2 bis 4,
**dadurch gekennzeichnet,**
**dass** die Hüllen (11a', 11a", 11b', 11b") der ersten Bowdenzuganordnung (10a) und der zweiten Bowdenzuganordnung (10b) jeweils einen ersten Abschnitt (11a', 11 b') und einen zweiten Abschnitt (11a", 11 b") umfassen, welche voneinander getrennt sind, wobei bezüglich der ersten Bowdenzuganordnung (10a) sich der erste Abschnitt (11a') der Hülle von der Betätigungsvorrichtung (20; 30) zu ersten Rahmenbefestigungsmitteln (19a) erstreckt, um den ersten Abschnitt (11a') der Hülle an dem Sitzrahmen (1) anzubringen, und sich der zweite Abschnitt (11a") der Hülle von den ersten Befestigungsmitteln (15a; 16a) zu den zweiten Befestigungsmitteln (17a; 16b) erstreckt, und
wobei bezüglich der zweiten Bowdenzuganordnung (10b) sich der erste Abschnitt (11b') der Hülle von der Betätigungsvorrichtung (20; 30) zu zweiten Rahmenbefestigungsmitteln (19b) erstreckt, um den ersten Abschnitt (11b') der Hülle an dem Sitzrahmen (1) anzubringen, und sich der zweite Abschnitt (11 b") der Hülle von den dritten Befestigungsmitteln (15b; 16b) zu den vierten Befestigungsmitteln (17b; 16a) erstreckt.

6. Stützvorrichtung nach Anspruch 5,
**dadurch gekennzeichnet,**
**dass** die ersten Rahmenbefestigungsmittel (19a) integral mit Verbindungsmitteln ausgebildet sind, um den ersten Endabschnitt (13b) des Drahtes (12b) der zweiten Bowdenzuganordnung (10b) mit dem Sitzrahmen (1) zu verbinden und/oder die zweiten Rahmenbefestigungsmittel (19b) integral mit Verbindungsmitteln ausgebildet sind, um den ersten Endabschnitt (13a) des Drahtes (12a) der ersten Bowdenzuganordnung (10a) mit dem Sitzrahmen (1) zu verbinden.

7. Stützvorrichtung nach einem der vorhergehenden Ansprüche 2 bis 6,
**dadurch gekennzeichnet,**
**dass** Verbindungsmittel, um den ersten Endabschnitt (13a) des Drahtes (12a) der ersten Bowdenzuganordnung (10a) mit dem Sitzrahmen (1) zu verbinden und/oder Verbindungsmittel, um den ersten Endabschnitt (13b) des Drahtes (12b) der zweiten Bowdenzuganordnung (10b) mit dem Sitzrahmen (1) zu verbinden, die Form eines Z-Nippels aufweisen.

8. Stützvorrichtung nach Anspruch 3 oder Anspruch 4,
**dadurch gekennzeichnet,**
**dass** die Hüllen (11a', 11a", 11b', 11b") der ersten Bowdenzuganordnung (10a) und der zweiten Bowdenzuganordnung (10b) jeweils einen ersten Abschnitt (11a', 11 b') und einen zweiten Abschnitt (11a", 11 b") umfassen, welche voneinander getrennt sind,
wobei bezüglich der ersten Bowdenzuganordnung (10a) sich der erste Abschnitt (11a') der Hülle von den ersten Befestigungsmitteln (15a) zu der Betätigungsvorrichtung (40) erstreckt und sich der zweite Abschnitt (11a") der Hülle von der Betätigungsvorrichtung (40) zu den zweiten Befestigungsmitteln (17a) erstreckt,
wobei bezüglich der zweiten Bowdenzuganordnung (10b) sich der erste Abschnitt (11 b') der Hülle von den dritten Befestigungsmitteln (15b) zu der Betätigungsvorrichtung (40) erstreckt und sich der zweite Abschnitt (11 b") der Hülle von der Betätigungsvorrichtung (40) zu den vierten Befestigungsmitteln (17b) erstreckt,
wobei sich ein zweiter Endabschnitt (14a) des Drahtes (12a) der ersten Bowdenzuganordnung (10a) von den zweiten Befestigungsmitteln (17a) erstreckt, und
wobei sich ein zweiter Endabschnitt (14b) des Drahtes (12b) der zweiten Bowdenzuganordnung von den vierten Befestigungsmitteln (17b) erstreckt.

9. Stützvorrichtung nach Anspruch 8,
**dadurch gekennzeichnet,**
**dass** die Betätigungsvorrichtung (40) ein Gleitteil (48) umfasst, welches gleitbar mit einem befestigten Teil (45) der Betätigungsvorrichtung (40) verbunden ist, wobei der erste Abschnitt (11a') der Hülle der ersten Bowdenzuganordnung (10a) und der erste Abschnitt (11b') der Hülle der zweiten Bowdenzuganordnung (10b) mit dem Gleitteil (48) gekoppelt sind und der zweite Abschnitt (11a') der Hülle der ersten Bowdenzuganordnung (10a) und der zweite Abschnitt (11b") der Hülle der zweiten Bowdenzuganordnung (10b) mit dem befestigten Teil (45) gekoppelt sind.

10. Stützvorrichtung nach Anspruch 8 oder Anspruch 9,
**dadurch gekennzeichnet,**
**dass** die Betätigungsvorrichtung (40) darüber hinaus Mittel (43, 44) umfasst, um das Gleitteil (48) zu bewegen.

11. Stützvorrichtung nach einem der Ansprüche 1 bis 8,
**dadurch gekennzeichnet,**
**dass** die Betätigungsvorrichtung (20; 30) Aufwickelmittel (25) umfasst, um einen Draht (12a) der ersten Bowdenzuganordnung (10a) und einen Draht (12b) der zweiten Bowdenzuganordnung (10b) in entgegengesetzte Richtungen aufzuwickeln.

12. Stützvorrichtung nach einem der Ansprüche 2 bis 11,
**dadurch gekennzeichnet,**
**dass** das Stützteil (3) zwei Seitenteile (4) und mehrere quer verlaufende Teile (6), welche sich zwischen den Seitenteilen (4) erstrecken, umfasst,
wobei die ersten Befestigungsmittel (15a; 16a), die zweiten Befestigungsmittel (17a; 16b), die dritten Befestigungsmittel (17a; 16b) und die vierten Befestigungsmittel (17b; 16a) derart ausgestaltet sind, dass sie zumindest teilweise das entsprechende Seitenteil (4) umfassen.

13. Stützvorrichtung nach Anspruch 12,
**dadurch gekennzeichnet,**
**dass** die ersten Befestigungsmittel (15a; 16a), die zweiten Befestigungsmittel (17a; 16b), die dritten Befestigungsmittel (15b; 16b) und die vierten Befestigungsmittel (17b; 16a) zumindest einen Clip-Abschnitt (24) zur Befestigung des entsprechenden Seitenteils (4) aufweisen.

14. Stützvorrichtung nach einem der vorhergehenden Ansprüche,
**dadurch gekennzeichnet,**
**dass** ein nicht umhüllter Abschnitt eines Drahtes (12a) der ersten Bowdenzuganordnung (10a) und/oder ein nicht umhüllter Abschnitt eines Drahtes (12b) der zweiten Bowdenzuganordnung (10b) mit einem Kunststoffmaterial überdeckt ist.

15. Stützvorrichtung nach einem der vorhergehenden Ansprüche,
**dadurch gekennzeichnet,**
**dass** die Betätigungsvorrichtung (20; 30; 40) mit einer selbst blockierenden Eigenschaft versehen ist.

16. Sitzstruktur umfassend
einen Sitzrahmen (1),
eine Stützvorrichtung nach einem der vorhergehenden Ansprüche, wobei die Stützvorrichtung mit dem Sitzrahmen (1) gekoppelt ist.

17. Sitzstruktur nach Anspruch 16,
**dadurch gekennzeichnet,**
**dass** die Stützvorrichtung elastisch in dem Sitzrahmen (1) eingehängt ist.

## Revendications

1. Ensemble de support ayant une première région de support ayant un degré ajustable de support et une seconde région de support ayant un degré ajustable de support, comprenant :
un organe de support (3) à incorporer dans une armature de siège (1),
un premier agencement de câble Bowden (10a) pour ajuster le degré de support dans la première région de support, et
un second agencement de câble Bowden (10b) pour ajuster le degré de support dans la seconde région de support,
**caractérisé par**
un actionneur (20 ; 30 ; 40) couplé au premier agencement de câble Bowden (10a) et au second agencement de câble Bowden (10b),
où l'actionneur (20 ; 30 ; 40) est configuré de façon à agir simultanément sur le premier agencement de câble Bowden (10a) et sur le second agencement de câble Bowden (10b) dans des directions opposées.

2. Ensemble de support selon la revendication 1, **caractérisé en ce que**
le premier agencement de câble Bowden (10a) et le second agencement de câble Bowden (10b) comprennent chacun un fil (12a, 12b) guidé dans une gaine (11a', 11a", 11b', 11b"), où l'ensemble de support comprend en outre :
un premier moyen d'attache (15a ; 16a) pour attacher la gaine (11a', 11a") du premier agencement de câble Bowden (10a) sur un côté de l'organe de support (3) dans la première région de support,
un deuxième moyen d'attache (17a ; 16b) pour attacher la gaine (11a', 11a") du premier agencement de câble Bowden sur le côté opposé de l'organe de support (3) dans la première région de support,
un troisième moyen d'attache (15b ; 16b) pour attacher la gaine (11b', 11b") du second agencement de câble Bowden sur un côté de l'organe de support (3) dans la seconde région de support,
un quatrième moyen d'attache (17b ; 16a) pour attacher la gaine (11b', 11b") du second agencement de câble Bowden (10b) sur le côté opposé de l'organe de support (3) dans la seconde région de support,
où une première portion d'extrémité (13a) du fil (12a) du premier agencement de câble Bowden (10a) s'étend du premier moyen d'attache (15a ; 16a) et est adaptée pour être connectée à l'armature de siège (1), et
où une première portion d'extrémité (13b) du fil (12b) du second agencement de câble Bowden (10b) s'étend du troisième moyen d'attache (15a ; 16b) et est adaptée pour être connectée à l'armature de siège (1).

3. Ensemble de support selon la revendication 2, **caractérisé en ce que**
le premier moyen d'attache (15a ; 16a) et le quatrième moyen d'attache (17b ; 16a) sont situés sur le même côté de l'organe de support (3) et le deuxième moyen d'attache (17a ; 16b) et le troisième moyen d'attache (15b ; 16a) sont situés sur le même côté de l'organe de support (3).

4. Ensemble de support selon la revendication 3, **caractérisé en ce que**
l'organe de support comprend un organe (16a) formant solidairement le premier moyen d'attache et le quatrième moyen d'attache et/ou un organe (16b) formant solidairement le deuxième moyen d'attache et le troisième moyen d'attache.

5. Ensemble de support selon l'une quelconque des revendications 2 à 4, **caractérisé en ce que**
les gaines (11a', 11a", 11b', 11b") du premier agencement de câble Bowden (10a) et du second agencement de câble Bowden (10b) comprennent chacune une première portion (11a', 11b') et une seconde portion (11a", 11b") qui sont séparées l'une de l'autre, où pour le premier agencement de câble Bowden (10a) la première portion (11a') de la gaine s'étend de l'actionneur (20; 30) à un premier moyen d'attache d'armature (19a) pour attacher la première portion (11a') de la gaine à l'armature de siège (1) et la seconde portion (11a") de la gaine s'étend du premier moyen d'attache (15a ; 16a) au deuxième moyen d'attache (17a ; 16b), et
où pour le second agencement de câble Bowden (10b) la première portion (11b') de la gaine s'étend de l'actionneur (20 ; 30) à un deuxième moyen d'attache d'armature (19b) pour attacher la première portion (11b') de la gaine à l'armature de siège (1) et la seconde portion (11b") de la gaine s'étend du troisième moyen d'attache (15b ; 16b) au quatrième moyen d'attache (17b ; 16a).

6. Ensemble de support selon la revendication 5, **caractérisé en ce que**
le premier moyen d'attache d'armature (19a) est solidairement formé avec un moyen de connexion pour connecter la première portion d'extrémité (13b) du fil (12b) du second agencement de câble Bowden (10b) à l'armature de siège (1) et/ou le deuxième moyen d'attache d'armature (19b) est solidairement formé avec un moyen de connexion pour connecter la première portion d'extrémité (13a) du fil (12a) du premier agencement de câble Bowden (10a) à l'armature de siège (1).

7. Ensemble de support selon l'une quelconque des revendications précédentes 2 à 6,
**caractérisé en ce que**
un moyen de connexion pour connecter la première portion d'extrémité (13a) du fil (12a) du premier agencement de câble Bowden (10a) à l'armature de siège (1) et/ou un moyen de connexion pour connecter la première portion d'extrémité (13b) du fil (12b) du second agencement de câble Bowden (10b) à l'armature de siège (1) a la forme d'un raccord en Z.

8. Ensemble de support selon la revendication 3 ou la revendication 4,
**caractérisé en ce que**
les gaines (11a', 11a", 11b', 11b") du premier agencement de câble Bowden (10a) et du second agencement de câble Bowden (10b) comprennent chacune une première portion (11a', 11b') et une seconde portion (11a" , 11b'') qui sont séparées l'une de l'autre,
où pour le premier agencement de câble Bowden (10a) la première portion (11a') de la gaine s'étend du premier moyen d'attache (15a) à l'actionneur (40) et la seconde portion (11a" ) de la gaine s'étend de l'actionneur (40) au deuxième moyen d'attache (17a),
où pour le second agencement de câble Bowden (10b) la première portion (11b') de la gaine s'étend du troisième moyen d'attache (15b) à l'actionneur (40) et la seconde portion (11b") de la gaine s'étend de l'actionneur (40) au quatrième moyen d'attache (17b),
où une seconde portion d'extrémité (14a) du fil (12a) du premier agencement de câble Bowden (10a) s'étend du deuxième moyen d'attache (17a), et
où une seconde portion d'extrémité (14b) du fil (12b) du second agencement de câble Bowden s'étend du quatrième moyen d'attache (17b).

9. Ensemble de support selon la revendication 8, **caractérisé en ce que**
l'actionneur (40) comprend un organe de glissement (48) qui est connecté avec faculté de glissement à un organe fixe (45) de l'actionneur (40), la première portion (11a') de la gaine du premier agencement de câble Bowden (10a) et la première portion (11b') de la gaine du second agencement de câble Bowden (10b) étant couplées à l'organe de glissement (48) et la seconde portion (11a') de la gaine du premier agencement de câble Bowden (10a) et la seconde portion (11b'') de la gaine du second agencement de câble Bowden (10b) étant couplées à l'organe fixe (45).

10. Ensemble de support selon la revendication 8 ou la revendication 9,
**caractérisé en ce que**
l'actionneur (40) comprend en outre un moyen (43, 44) pour déplacer l'organe de glissement (48).

11. Ensemble de support selon l'une quelconque des revendications 1 à 8,
**caractérisé en ce que**
l'actionneur (20 ; 30) comprend un moyen d'enroulement (25) pour enrouler un fil (12a) du premier agencement de câble Bowden (10a) et un fil (12b) du second agencement de câble Bowden (10b) dans des directions opposées.

12. Ensemble de support selon l'une quelconque des revendications 2 à 11,
**caractérisé en ce que**
l'organe de support (3) comprend deux organes latéraux (4) et une pluralité d'organes transversaux (6) s'étendant entre les organes latéraux (4),
où le premier moyen d'attache (15a ; 16a), le deuxième moyen d'attache (17a ; 16b), le troisième moyen d'attache (17a ; 16b) et le quatrième moyen d'attache (17b ; 16a) sont configurés pour inclure au moins en partie l'organe latéral correspondant (4).

13. Ensemble de support selon la revendication 12, **caractérisé en ce que**
le premier moyen d'attache (15a ; 16a), le deuxième moyen d'attache (17a ; 16b), le troisième moyen d'attache (15b ; 16b) et le quatrième moyen d'attache (17b ; 16a) ont au moins une portion de fixation (24) pour une attache à l'organe latéral respectif (4).

14. Ensemble de support selon l'une quelconque des revendications précédentes,
**caractérisé en ce que**
une portion non gainée d'un fil (12a) du premier agencement de câble Bowden (10a) et/ou une portion non gainée d'un fil (12b) du second agencement de câble Bowden (10b) sont couvertes d'une matière plastique.

15. Ensemble de support selon l'une quelconque des revendications précédentes, **caractérisé en ce que**
l'actionneur (20 ; 30 ; 1 40) est doté d'une capacité d'autoblocage.

16. Structure de siège, comprenant
une armature de siège (1),
un ensemble de support selon l'une quelconque des revendications précédentes, l'ensemble de support étant couplé à l'armature de siège (1).

17. Structure de siège selon la revendication 16, **caractérisée en ce que**
l'ensemble de support est en suspension de manière élastique dans l'armature de siège (1).
